**Europäisches Patentamt**

**European Patent Office**

**Office européen des brevets**

(11) Numéro de publication: **0 080 396**
**B1**

(12) **FASCICULE DE BREVET EUROPEEN**

(45) Date de publication du fascicule du brevet: 30.04.86

(51) Int. Cl.⁴: **H 04 M 19/08**

(21) Numéro de dépôt: **82402054.9**

(22) Date de dépôt: **09.11.82**

(54) Circuit téléphonique, géré par microprocesseur à circuit intégré de transmission 2 fils-4 fils, et alimentation de sauvegarde par courant de ligne.

(30) Priorité: **20.11.81 FR 8121803**

(43) Date de publication de la demande:
**01.06.83 Bulletin 83/22**

(45) Mention de la délivrance du brevet:
**30.04.86 Bulletin 86/18**

(84) Etats contractants désignés:
**DE GB IT SE**

(56) Documents cités:
**FR-A-2 151 799**
**FR-A-2 282 198**
**GB-A-2 002 996**

(73) Titulaire: **THOMSON-CSF TELEPHONE**
**146, Boulevard de Valmy**
**F-92707 Colombes (FR)**

(72) Inventeur: **Le Creff, Michel**
**THOMSON-CSF SCPI 173 boulevard Haussmann**
**F-75379 Paris Cedex 08 (FR)**
Inventeur: **Guillou, Françoise**
**THOMSON-CSF SCPI 173 boulevard Haussmann**
**F-75379 Paris Cedex 08 (FR)**
Inventeur: **Buhagiar, François**
**THOMSON-CSF-SCPI 173 boulevard Haussmann**
**F-75379 Paris Cedex 08 (FR)**

(74) Mandataire: **Weinmiller, Jürgen et al**
**Zeppelinstrasse 63**
**D-8000 München 80 (DE)**

Courier Press, Leamington Spa, England.

**Description**

La présente invention se rapporte à un circuit téléphonique géré par microprocesseur à circuit intégré de transmission 2 fils-4 fils et alimentation de sauvegarde par courant de ligne.

Il existe des circuits intégrés réalisant la fonction de transmission 2 fils-4 fils. Ces circuits intégrés bon marché sont prévus pour l'envoi de numérotation multifréquence, mais non pour l'envoi d'impulsions de numérotation.

On connaît par le document FR—A—2 151 799 un circuit téléphonique alimenté à partir de la tension de ligne à travers un circuit de régulation de tension série, et comportant un régulateur de tension de type shunt, ce dernier se comportant, au décrochage du combiné, pendant un court laps de temps (environ 150 ms), presque comme un court-circuit, réduisant ainsi pendant ce laps de temps la tension d'insertion du circuit téléphonique. Cependant, un tel circuit ne permet de réduire ladite tension d'insertion qu'au décrochage du combiné et ne comporte aucun moyen permettant de maintenir en permanence, ou tout au moins lors de l'envoi d'une numérotatvon décimale, cette tension d'insertion à ce faible valeur. En outre, ce circuit connu, du fait qu'il n'est alimenté que par le courant de ligne, ne peut pas comporter toutes les fonctions d'un terminal téléphonique ou télématique moderne (amplificateur "mains-libres", écran de visualisation, etc . . . ) nécessitant une puissance d'alimentation nettement supérieure à celle que peut fournir la batterie centrale classique.

La présente invention a pour objet un circuit permettant d'utiliser des circuits intégrés de transmission pour envoyer aussi bien de la numérotation multifréquence que de la numérotation par impulsions, le microprocesseur de ce circuit pouvant aussi bien être alimenté en courant à partir du secteur qu'à partir du courant de ligne.

Dans le circuit téléphonique conforme à la présente invention, qui est géré par un microprocesseur, le circuit intégré de transmission 2 fils-4 fils est alimenté, à partir de la tension de ligne redressée, à travers un interrupteur de ligne qui est commandé par un générateur de courant connecté en parallèle sur le circuit de transmission, ce circuit téléphonique comportant en outre: un circuit permettant de réduire sa tension d'insertion au décrochage du combiné pendant une durée déterminée et pendant toute la durée d'émission de chaque chiffre de numérotation décimale; un circuit d'alimentation régulée du microprocesseur connecté en dérivation sur le circuit de transmission et relié à un secteur d'alimentation électrique et comportant un condensateur réservoir; un circuit assurant avant une numérotation décimale ou une ouverture de rappel d'enregistrement une charge supplémentaire audit condensateur réservoir; et un condensateur mémorisant la tension de référence de l'alimentation stabilisée dudit microprocesseur.

La présente invention sera mieux comprise à la lecture de la description détaillée d'un mode de réalisation puis comme exemple non limitatif et illustrée par le dessin annexé sur lequel:

— la figure 1 est un bloc diagramme d'un circuit téléphonique conforme à la présente invention;

— les figures 2 à 4 sont des schémas détaillés de certains des blocs du circuit de la figure 1, et

— la figure 5 est un schéma simplifié d'un circuit de supervision pour le circuit de la figure 1.

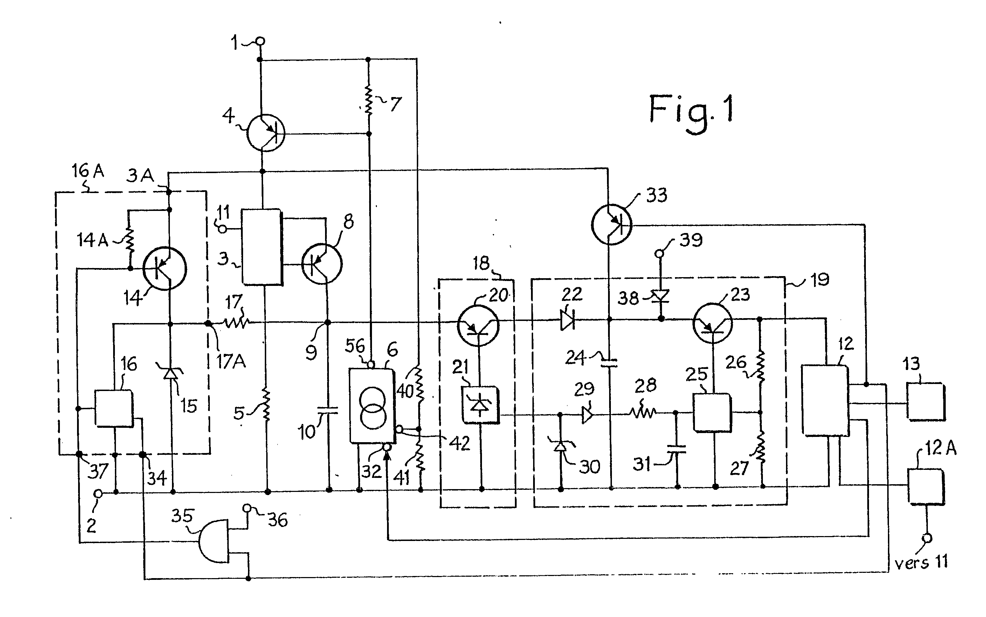

Le circuit téléphonique représenté de façon simplifiée sur la figure 1 comporte deux bornes d'alimentation en courant 1, 2 reliées à la sortie du redresseur (non représenté) du poste téléphonique ou du terminal dans lequel est implanté le circuit téléphonique décrit ci-dessous. La borne 1 est reliée au pôle positif de l'alimentation, et la borne 2 au pôle négatif. Le circuit téléphonique de l'invention est réalisé autour d'un circuit intégré 3, par exemple le circuit ITT 1045M. Le courant d'alimentation du circuit intégré 3 passe, depuis la borne 1, par le circuit émetteur-collecteur d'un transistor PNP 4, par le circuit intégré 3, et par une résistance 5 qui est reliée à la borne 2. La base du transistor 4 est reliée à un générateur de courant 6 et à la borne 1 à travers une résistance 7. Etant donné que le circuit intégré 3 ne nécessite qu'un faible courant d'alimentation, et que le courant de ligne alimentant le circuit téléphonique peut être important, une grande partie du courant sortant du transistor 4 passe par le trajet émetteur-collecteur d'un transistor 8 qui est relié d'autre part à une borne 9, le courant sortant du transistor 8 et passant par la borne 9 servant à alimenter une grande partie des éléments des circuits décrits ci-dessous. La borne 9 est reliée à la borne 2 par un condensateur de découplage 10, d'une valeur de 47 microfarads par exemple. La borne d'entrée 11 de signaux multifréquence du circuit intégré 3 est reliée, de façon non représentée, à la sortie de signaux multifréquence d'un circuit générateur 12A, qui peut par exemple être le circuit MK 5089, ce circuit 12A coopérant avec un microprocesseur approprié 12 qui peut être le circuit TMS 1200C par exemple, et qui est relié à un clavier 13 de numérotation. La borne 11 du circuit 3 peut également être reliée, de façon non représentée, à la sortie basse fréquence d'un circuit "mains libres", et à la sortie d'un générateur de "bips" de garde, par exemple. Dans ce cas, on peut raccorder ces différentes sources à la borne 11 par l'intermédiaire d'un circuit à fonction "OU".

Le collecteur du transistor 4 est également relié à une borne 3A qui est elle-même reliée à l'émetteur d'un transistor 14 dont le collecteur est relié via une diode Zener 15 à la borne 2. La base du transistor 14 est reliée à la borne 3A par une résistance 14A et à la sortie de commande d'un circuit monostable 16. Le circuit 16 est alimenté en parallèle sur la diode 15. Le point commun à la cathode de la diode Zener 15 et au collecteur du transistor 14 est relié à une borne 17A qui est elle-même reliée via une résistance 17 à la borne 9. Les éléments 14 à 16 forment un circuit 16A de régulation de tension d'insertion.

La tension existant entre les bornes 9 et 2 stabilisée par un circuit d'alimentation stabilisée 18, puis régulée par un circuit de régulation 19 pour servir à alimenter le microprocesseur 12, et le circuit 12A.

Le circuit de stabilisation de tension 18 comprend essentiellement un transistor ballast 20 qui est ici du type PNP et dont l'émetteur est relié à la borne 9. La base du transistor 20 est reliée à un circuit 21 de référence de tension. Le collecteur du transistor 20 est relié à l'entrée du circuit de regulation 19 qui comporte, à partir de cette entrée, une diode 22 en série avec le trajet émetteur-collecteur d'un transistor PNP 23 dont le collecteur est relié à borne positive d'alimentation en courant du circuit microprocesseur 12, la borne négative d'alimentation de ce circuit 12 étant reliée directement à la borne 2. De préférence, la diode 22 est du type Schottky présentant une très faible tension d'insertion, d'environ 0,2 volt. Le point commun de la cathode de la diode 22 et de l'émetteur du transistor 23 est relié par un condensateur réservoir 24, de très forte capacité, par exemple 1000 microfarads, à la borne 2. La base du transistor 23 est reliée à la sortie de commande d'un circuit comparateur classique 25 dont une entrée de comparaison de tension est reliée à la sortie d'un diviseur résistif comprenant les résistances 26 et 27 branchées entre le collecteur du transistor 23 et la borne 2. L'autre entrée de comparaison de tension du circuit 25 est reliée à travers une résistance 28 et une diode 29 à cathode d'une diode Zener 30 dont l'anode est reliée à la borne 2 et dont. la cathode est reliée d'autre part au circuit 21. Ladite autre entrée de tension de comparaison du circuit 25 est également reliée par un condensateur 31 à la borne 2.

La sortie de numérotation décimale du circuit 12 est reliée à l'entrée de commande 32 du générateur de courant 6. Le collecteur du transistor 4 est relié via le trajet émetteur-collecteur d'un transistor 33 de type PNP à l'émetteur du transistor 23. La base du transistor 33 est reliée à sortie de signaux de train de numérotation décimale du circuit 12, cette sortie étant également reliée à une entrée 34 de train de signaux de numérotation décimale du circuit 16 et à une première entrée d'un circuit 35 à fonction ET dont l'autre entrée est reliée à une borne 36. La borne 36 est reliée à une sortie de signal d'inhibition de combiné du circuit 12. La sortie du circuit 35 est reliée à la base du transistor 14. Le signal de train de numérotation décimale est un signal qui est normalement au niveau "0" et qui passe au niveau "1" un peu avant (environ 200 millisecondes) une ouverture de rappel d'enregistrement ou le début des signaux d'ouverture de boucle d'un chiffre de numérotation décimale d'appel, et ce signal repasse à la valeur "0" un peu après (également environ 200 millisecondes) la fin de l'ouverture de rappel ou des signaux de fermeture de boucle de ce chiffre de numéro d'appel. Ce signal est produit, de façon connue en soi, par le circuit 12. Ce circuit 12 produit, également de façon connue en soi, des signaux d'inhibition de combiné (écouteur et microphone) pendant toute la durée d'émission de chaque chiffre de numérotation décimale ou multifréquence.

L'émetteur du transistor 23 est relié à la cathode d'une diode 38 dont l'anode est reliée à une borne 39. La borne 39 est reliée au pôle positif d'un dispositif d'alimentation stabilisée alimenté en courant par le secteur de distribution électrique disponible à l'endroit où se trouve disposé le circuit de l'invention. Le pôle négatif de cette alimentation est relié à la borne 2. La valeur de la tension délivrée par ledit dispositif d'alimentation stabilisée est supérieure d'environ 1 volt à la tension stabilisée fournie par le circuit 18, ces tensions ayant par exemple pour valeurs respectives 5 et 4 volts. Ainsi, tant que le secteur d'alimentation ne fait pas défaut, la diode 22 est toujours bloquée et l'alimentation du circuit 12 est prise à partir de ce secteur. Dès que la tension du secteur baisse en dessous d'une certaine limite ou fait défaut, la diode 22 redevient conductrice, et le circuit 12 est alimenté à partir du courant de ligne téléphonique de la façon décrite ci-dessous.

Pour permettre au courant de ligne de circuler, au décrochage du combiné, de la borne 1 à la borne 2, il faut en particulier rendre passant le transistor 4. A cet effet, on dispose entre les bornes 1 et 2 un diviseur à résistances 40 et 41, le point commun de ces deux résistances étant relié à une entrée 42 d'établissement de courant du générateur de courant 6.

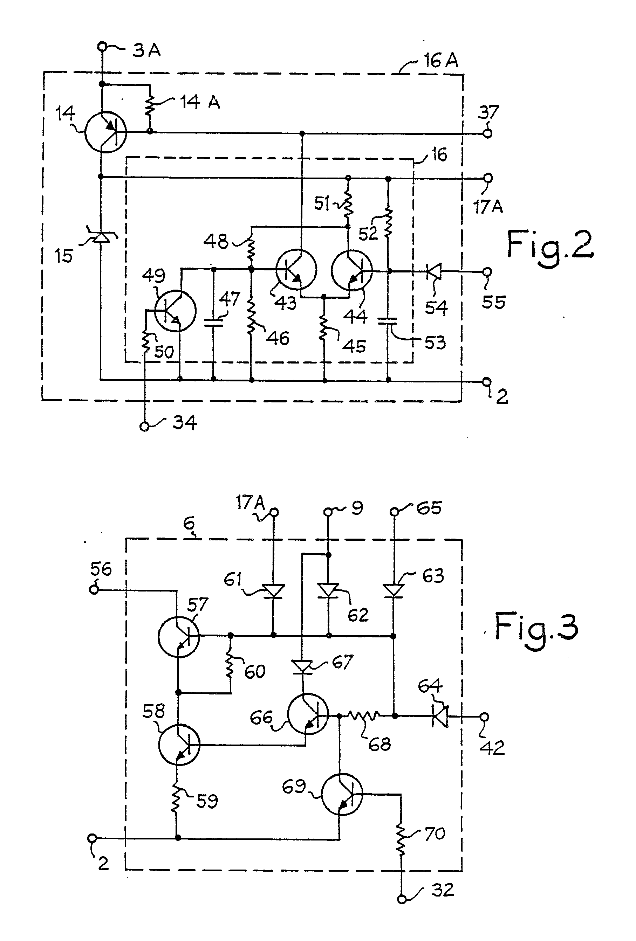

On a représenté sur la figure 2 un exemple de réalisation du circuit 16 A. Le circuit monostable 16 comprend essentiellement deux transistors 43, 44 de type NPN dont les émetteurs sont reliés ensemble, le point commun de ces émetteurs étant relié à la borne 2 par une résistance 45.

Le collecteur du transistor 43 est directement relié à la base du transistor 14. La base du transistor 43 est reliée à borne 2 par une résistance 46 en parallèle avec un condensateur de découplage 47, et cette base est également reliée au collecteur du transistor 44 par une résistance 48, et au collecteur d'un transistor 49 de type NPN. L'émetteur du transistor 49 est relié à la borne 2 et sa base est reliée par une résistance 50 à la borne 34. Le collecteur du transistor 44 est relié par une résistance 51 à la borne 17A, et sa base est reliée, d'une part, par une résistance 52 à la borne 17A, d'autre part par un condensateur 53 à la borne 2, et enfin à la cathode d'une diode 54 dont l'anode est reliée à une borne 55. Comme décrit ci-dessous, la borne 55 est reliée à une source de courant de l'alimentation stabilisée.

Dans le monostable 16 du circuit 16A décrit ci-dessus, la résistance 52 et le condensateur 53 déterminent la durée de l'impulsion émise par le monostable vers la base du transistor 14 à partir du moment où la tension sur la base du transistor 44 atteint un seuil de déclenchement, qui est, dans le cas présent, d'environ 2,5 volts. Ce seuil de déclenchement est déterminé par les résistances 46, 48 et 51 à partir de la tension existant aux bornes de la diode Zener 15, dont la tension de Zener est de 4 volts selon un mode de réalisation. Lors d'un appel reçu par le circuit téléphonique de l'invention, dès que l'abonné décroche le combiné, le courant de ligne peut commencer à circuler de la borne 1 à la borne 2 du fait que le transistor 4 est saturé et que le transistor 8 commence à débiter. Ce courant de ligne a d'abord principalement pour effet de commencer à charger le condensateur de découplage 10 et à passer dans la résistance 17 pour charger le condensateur 47, dont la valeur est nettement inférieure à celle du condensateur 53. On détermine les résistances 51 et 48 de façon que la somme de leur valeur soit nettement inférieure à la valeur de la résistance 52. De ce fait, le transistor 43 commencera à être passant avant le transistor 44. Pendant la durée de l'impulsion fournie par le monostable 16, le transistor 44 est bloqué et le transistor 43 est passant, ce qui fait le transistor 14 est passant, et une partie du courant de ligne le traverse, ce que fait baisser la tension entre les bornes 1 et 2. Lorsque le transistor 44 commence à être passant, par suite de l'augmentation de la tension aux bornes du condensateur 53 qui se charge moins vite que le condensateur 47, le transistor 43 se bloque, du fait que la tension sur sa base redescend en-dessous dudit seuil, ce qui entraîne le blocage du transistor 14, et donc la fin de l'impulsion fournie par le monostable 16. Dès la fin de cette impulsion, le courant de ligne ne peut passer dans le circuit 16A, ce qui fait que la tension entre les bornes 1 et 2 remonte légèrement. Dans un mode de réalisation, la tension entre les bornes 1 et 2 est inférieure à 6 volts pendant la durée de l'impulsion du monostable 16, et remote à une valeur légèrement inférieure à 8 volts après la fin de cette impulsion dont la durée est d'environ 1 seconde. Par conséquent, la tension d'insertion que présente le circuit téléphonique de l'invention est inférieure à une valeur déterminée, dans le cas présent 6 volts, un court laps de temps après le décrochage du combiné, ce qui fait que l'autocommutateur auquel est relié le poste téléphonique ou terminal en question peut prendre en compte le décrochage du combiné (fermeture de boucle), même si la ligne qui relie l'autocommutateur au poste téléphonique est de grande longueur.

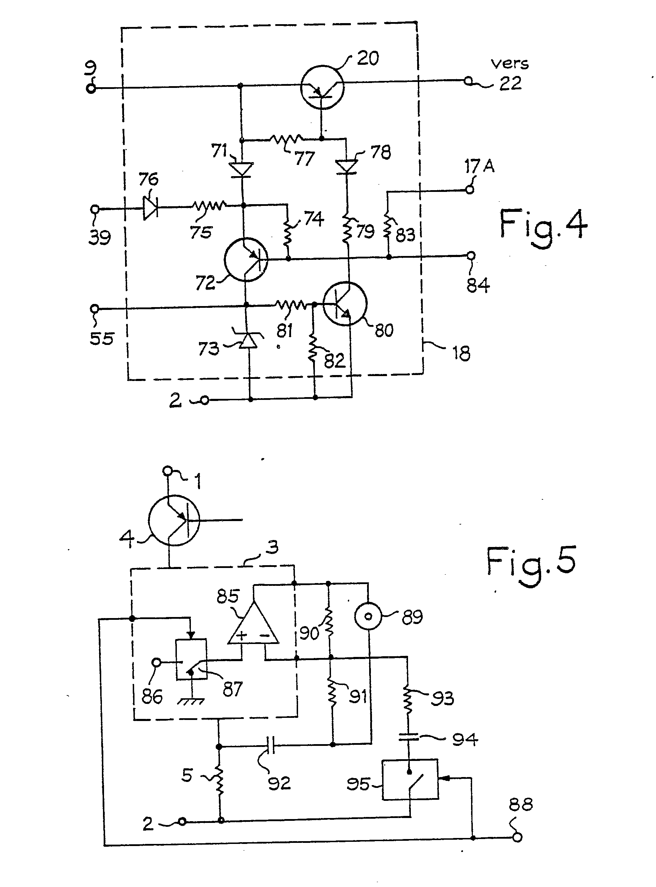

On a représenté sur la figure 3 le schéma du circuit 6 alimentant la base du transistor 4. Du fait que ce circuit 6 se trouve en parallèle sur le circuit de transmission 3, il ne doit pas en affecter l'impédance et doit donc se comporter comme un générateur de courant.

Le circuit 6 comporte une borne 56 directement reliée à la base du transistor 4. Le circuit 6 comporte entre la borne 56 et la borne 2 un circuit série se composant respectivement des circuits collecteur-émetteur de deux transistors 57, 58 de type NPN, et d'une résistance 59. La base du transistor 57 est reliée à son émetteur par une résistance 60. La base du transistor 57 est également reliée aux cathodes de quatre diodes respectivement référencées 61 à 64. Les anodes des diodes 61 à 64 sont repectivement reliées aux bornes 17A, 9, 65 et 42, la borne 65 étant reliée au pôle positif de la source d'alimentation en courant (non représentée) du microprocesseur 12. La base du transistor 58 est reliée à l'émetteur d'un transistor NPN 66 dont le collecteur est relié à la cathode d'une diode 67, l'anode de cette diode étant reliée à la borne 9. La base du transistor 66 est d'une part reliée par une résistance 68 à la base du transistor 57, et d'autre part au collecteur d'un transistor NPN 69 dont l'émetteur est relié à la borne 2 et dont la base est reliée par une résistance 70 à la borne 32.

Les résistances 40 et 41, reliées à la borne 42, permettent l'établissement du courant de base des transistors 66, 58 et 57, et par conséquent l'établissement du courant entre les bornes 56 et 2, à l'intérieur du circuit 6, ce qui rend passant le transistor 4 et permet l'établissement du courant dans le circuit de transmission 3. Le courant de base du transistor 4 est déterminé par la valeur de la résistance 59. Les diodes 61 à 63 forment un OU logique permettant d'alimenter les bases des transistors 57 et 66 en toutes circonstances, c'est-à-dire aussi bien pendant la conversation (diode 62), que pendant le cycle de démarrage au décrochage du combiné (diode 61), que pendant la numérotation décimale (diode 63). La borne 32 étant reliée à la sortie de signaux de numérotation décimale du circuit microprocesseur 12, ces signaux de numérotation rendent successivement passant et bloqué le transistor 69 ainsi que les transistors 66 et 58, et donc le transistor 4. La succession des états passants et bloqués du transistor 4 est interprétée par l'autocommutateur en question comme une succession d'ouvertures et de fermetures de boucles.

On a représenté sur la figure 4 un exemple de réalisation du circuit 18 de stabilisation de tension. L'émetteur du transistor 20 est relié à la borne 2 par un circuit série comportant respectivement une diode 71, le circuit émetteur-collecteur d'un transistor PNP 72, et une diode Zener 73 dont l'anode est reliée à la borne 2. La base du transistor 72 est reliée à son émetteur une résistance 74. L'émetteur du transistor 72 est relié d'autre part par une résistance 75 à la cathode d'une diode 76 dont l'anode est reliée à la borne 39, cette borne 39 étant reliée comme indiqué ci-dessus à l'anode de la diode 38 (voir figure 1). La base du transistor 20 est reliée à son émetteur par une résistance 77. La base du transistor 20 est reliée d'autre part à la borne 2 par un circuit série comportant une diode 78 montée en sens passant, une résistance 79, et le circuit collecteur-émetteur d'un transistor NPN 80. La base du transistor 80 est reliée d'une part à la cathode de la diode Zener 73 par une résistance 81, et d'autre part à la borne 2 par une résistance 82. La base du transistor 72 est reliée, d'une part, via une résistance 83 à la borne 17A, et d'autre part à une borne 84, qui est elle-même reliée à la cathode de la diode Zener 30.

Dans le circuit de stabilisation de tension 18, les résistances 81 et 82 sont déterminées pour que le transistor 80 devienne passant lorsque la tension aux bornes de la diode Zener 73 atteint la valeur de la tension de Zener de cette diode. Cette tension de Zener est atteinte lorsque la tension entre les bornes 9 et 2 atteint sa valeur nominale qui est, dans un exemple de réalisation, de 4 volts. Lorsque le transistor 80 est passant, le transistor 20 est passant également, et le courant de ligne peut également alimenter le microprocesseur 12 via la diode 22 et le transistor 23. Toujours dans le même exemple de réalisation, la tension entre le collecteur du transistor 23 et la borne 2, c'est-à-dire la tension d'alimentation du microprocesseur 12 est de 3,2 volts, la tension aux bornes du condensateur réservoir 24 étant alors de 3,8 volts environ. Ainsi, tant que la tension entre les bornes 9 et 2 est en-dessous de sa valeur nominale, le transistor 20 est bloqué, et si la tension secteur alimentant la borne 39 fait défaut, le microprocesseur 12 ne peut être alimenté par le courant de ligne. Pour éviter alors tout fonctionnement incorrect du microprocesseur lors du rétablissement de sa tension d'alimentation, on peut prévoir un circuit de remise à zéro effectuant la remise à zéro de son programme et de ses mémoires vives lors du rétablissement de la tension d'alimentation, la réalisation d'un tel circuit de remise à zéro étant évidente pour l'homme de l'art. L'émetteur du transistor 72 peut recevoir du courant aussi bien de la borne 9 (courant de ligne) via la diode 71 que de la borne 39 (alimentation secteur) via la diode 76. La cathode de la diode Zener 73 étant reliée à la borne 55 (voir figure 2), le courant sortant du collecteur du transistor 72 peut également servir à charger rapidement le condensateur 53 du monostable 16 après chaque train de signaux de numérotation décimale, ceci afin de ne pas faire basculer intempéstivement le monostable 16 à la fin d'un train de signaux de numérotation, donc afin de ne pas rendre passant le transistor 14 après chaque train de signaux de numérotation.

Etant donné qu'en l'absence de tension secteur, le condensateur réservoir 24 ne peut jouer pleinement son rôle que s'il est suffisamment chargé, et que ce condensateur se décharge pendant l'émission de chiffres en numérotation décimale (ouvertures de boucle coupant le courant de ligne), la présente invention prévoit d'apporter une charge supplémentaire à ce condensateur réservoir juste avant une ouverture de rappel d'enregistreur ou l'émission d'un chiffre ou pendant l'interchiffre en numérotation décimale. Le dispositif permettant cette charge supplémentaire est constitué par le transistor 33 qui est rendu passant par les signaux précités de trains de numérotation décimale issus du microprocesseur 12. Du fait que, comme précisé ci-dessus ces signaux passent à l'état "1" environ 200 milliseconds avant une ouverture de rappel ou la première ouverture de boucle, le transistor 14 est rendu passant avant l'ouverture de rappel ou la première ouverture de boucle, ce qui permet de charger le condensateur 24 à une tension supérieure à la tension existant normalement à ses bornes avant l'ouverture de rappel ou la première ouverture de boucle. Dans ledit exemple de réalisation, la tension normale aux bornes du condensateur 24 est de 3,8 volts, et juste avant le première ouverture de boucle, la tension aux bornes du condensateur 24 atteint environ 7 volts. A chaque ouverture de boucle, le condensateur 24 se décharge un peu pour alimenter le microprocesseur 12 en l'absence de tension secteur d'alimentation, et à la fin d'un chiffre la tension aux bornes du condensateur revient pratiquement à ladite valeur nominale. Etant donné que ledit signal de train de numérotation décimale ne repasse à l'état "0" qu'environ 200 millisecondes après la dernière ouverture de boucle d'un chiffre, le condensateur 24 peut recevoir une charge supplémentaire entre la dernière ouverture de boucle et l'instant où le signal de train de numérotation décimale repasse à "0". De même, le condensateur 24 peut recevoir une charge supplémentaire avant une ouverture de rappel.

La tension d'insertion du circuit décrit ci-dessus passe à une valeur inférieure qui est, pour l'exemple de réalisation précité, d'environ 6 volts, au moment du décrochage du combiné et pendant l'émission de chaque chiffre de la numérotation décimale. Dans ce dernier cas, le transistor 14 est rendu passant par le signal présent à la sortie du circuit 35 à fonction ET. Le circuit 35 reçoit du microprocesseur 12 deux signaux: d'une part des signaux d'ouverture de boucle passant au niveau "1" à chaque ouverture de boucle, et d'autre part sur la borne 36, un signal d'inhibition de combiné normalement à l'état "0" et passant "1" pendant toute la durée d'émission d'un chiffre de numérotation décimale. Par conséquent, le transistor 14 est rendu passant toute la durée d'émission de chaque chiffre de numérotation décimale. De cette façon, la tension d'insertion du circuit téléphonique est à sa valeur minimale pendant l'émission de chaque chiffre, et l'autocommutateur en question peut correctement prendre en compte tous les chiffres émis, même si les lignes de liaison entre l'autocommutateur et le poste d'abonné sont très longues.

On a schématiquement représenté sur la figure 5 un circuit permettant la supervision des signaux de numérotation produits par le circuit de l'invention. Sur cette figure in a uniquement représenté les éléments du circuit de la figure 1 necessaires à la compréhension du circuit de supervision. Le circuit intégré 3 comprend, en autres, un circuit amplificateur opérationnel 85 dont une des entrée est reliée, de façon interne, à une borne 86 par l'intermédiaire d'un circuit d'inhibition 87 dont la commande est reliée, à l'extérieur du circuit 3, à une borne 88 qui est elle-même reliée, de façon non représentée, à une sortie de signal d'inhibition de combiné du microprocesseur 12. L'écouteur 89 du combiné du poste téléphonique est branché entre le point commun de la résistance 91 et du condensateur 92 et la sortie de l'amplificateur 85, une résistance de contre-réaction 90 étant disposée de façon classique. Ladite autre entrée du circuit 85 est également reliée par une résistance 91 en série avec un condensateur 92 à la sortie du circuit 3 qui est reliée à la résistance 5. Le point commun de la résistance 90 et de la résistance 91 est relié à la borne 2 par un circuit série comportant une résistance 93 dont la valeur est nettement supérieure à l'impédance de l'écouteur, un condensateur d'isolement 94, et un interrupteur commandé 95 dont la borne de commande est reliée à la borne 88.

En phase de numérotation décimale ou multifréquence, une résiduelle du signal de numérotation est présente aux bornes de la résistance 5, et l'inhibition du combiné est totale par suite du signal d'inhibition envoyé par le microprocesseur 12 sur la borne 88. Pour superviser les signaux de numérotation, il est donc nécessaire de réinjecter une faible partie du signal de numérotation dans le circuit d'écouteur. Pour effectuer cette réinjection, on relie l'entrée negative de l'amplificateur d'écouteur 85 par l'intermédiaire d'une forte résistance 93 au potentiel commun de la borne 2.

Si l'on veut utiliser un circuit d'écote amplifiée, on utilise un amplificateur différentiel (non représenté) dont les entrées sont reliées aux bornes de l'écouteur, le signal de sortie étant prélevé entre la borne 2 et la sortie de cet amplificateur différentiel. Si l'on veut utiliser un dispositif anti-Larsen à partir du signal de microphone, on branche les entrées d'un autre amplificateur différentiel aux bornes du microphone, et on prélève le signal de sortie entre la sortie de cet amplificateur différentiel et la borne 2.

**Revendications**

1. Circuit téléphonique géré par microprocesseur à circuit intégré de transmission 2 fils-4 fils·et alimentation de sauvegarde par courant de ligne et comportant un circuit (16A) permettant de réduire sa tension d'insertion au décrochage du combiné pendant une durée déterminée, caractérisé par le fait que le circuit intégré de transmission 2 fils-4 fils (3) est alimenté, à partir de la tension de ligne redressée (1, 2) à travers un interrupteur de ligne (4) qui est commandé par un générateur de courant (6) connecté en parallèle sur le circuit de transmission, ce circuit téléphonique en outre: un circuit d'alimentation régulée (19) du microprocesseur (12) connecté en dérivation sur le circuit de transmission et relié à un secteur d'alimentation électrique (38, 39); et des moyens (35, 14) permettant audit circuit de réduction de tension d'insertion de réduire cette dernière également pendant toute la durée d'émission de chaque chiffre de numérotation décimale.

2. Circuit téléphonique selon la revendication 1, caractérisé par le fait que le circuit (16A) permettant de réduire sa tension d'insertion comporte un circuit série se composant du trajet émetteur-collecteur d'un transistor (14) en série avec une diode Zener (15), ce circuit série étant connecté en parallèle sur le circuit de transmission et son impédance de charge (5), ledit transistor étant commandé par un circuit monostable (16) dont l'entrée de déclenchement est reliée à un circuit (46, 48, 51) recevant une partie du courant de ligne ainsi qu'à une sortie (34) du microprocesseur (12) activée peu avant l'émission d'un chiffre de numérotation décimale et désactivée peu aprés la fin de cette émission.

3. Circuit téléphonique selon l'une quelconque des revendications 1 ou 2, caractérisé par le fait que le circuit d'alimentation (19) du microprocesseur est relié au circuit de transmission par l'intermédiaire d'un circuit de stabilisation de tension (18) à coupure en cas de sous-tension.

4. Circuit téléphonique selon l'une quelconque des revendications précédentes, caractérisé par le fait que le circuit d'alimentation régulée (19) comporte un condensateur réservoir (24) connecté en parallèle sur le circuit de transmission par l'intermédiaire d'un transistor (33) dont la base est reliée à une sortie du microprocesseur activée peu de temps avant l'émission d'un chiffre de numérotation décimale ou une ouverture de rappel est désactivée peu aprés cette émission ou cette ouverture de rappel.

5. Circuit téléphonique selon l'une quelconque des revendications précédentes, caractérisé par le fait que le circuit d'alimentation régulée comporte un condensateur (31) mémorisant sa tension de référence.

6. Circuit téléphonique selon l'une quelconque des revendications précédentes, caractérisé par le fait qu'il comporte un circuit de supervision de numérotation comprenant un circuit série se composant d'une résistance de valeur élevée (93), d'un condensateur d'isolement (94), et d'un interrupteur commandé (95) dont l'entrée de commande est reliée à une sortie (88) d'inhibition de combiné du microprocesseur, ce circuit série reliant l'une des entrées du circuit amplificateur d'écouteur à la borne (2) de potentiel commun du circuit.

**Patentansprüche**

1. Als integrierter Schaltkreis ausgebildeter und von eifem Mikroprozessor überwachter Telefonkreis zur Zweidraht-Vierdrahtübertragung und zur Speisungssicherstellung durch Leitungsstrom, mit einem Schaltkreis (16A), mit dem seine Einfügungsspannung beim Abheben des Hörers während einer vorgegebenen Zeitdauer verringert werden kann, dadurch gekennzeichnet, daß der integrierte Zweidraht-Vierdrahtübertragungsschaltkreis (3) ausgehend von der gleichgerichteten Leitungsspannung (1, 2) über einen Leitungsschalter (4) gespeist wird, der von einem parallel an den Übertragungsschaltkreis angeschlossenen Stromgenerator (6) gesteuert wird, und daß der Telefonkreis außerdem einen geregelten Mikroprozessor-Speisekreis (19), der parallel zum Übertragungskreis angeschlossen ist und einem elektrischen Speisenetz (38, 39) verbunden ist, und Mittel (35, 14) aufweist, mit denen der Schaltkreis zur Verringerung der Einfügungsspannung diese Spannung auch während der gesamten Dauer der Aussendung jeder Ziffer der dezimalen Nummer verringern kann.

2. Telefonkreis nach Anspruch 1, dadurch gekennzeichnet, daß der Schaltkreis (16A), mit dem die Einfügungsspannung reduziert werden kann, einen Serienschaltkreis aufweist, ser sich aus der Emitter-Kollektorstrecke eines Transistors (14) in Reihe mit einer Zenerdiode (15) zusammensetzt und parallel zum Übertragungskreis und seiner Lastimpedanz (5) angeschlossen ist, wobei dieser Transistor von einem monostabilen Schaltkreis (16) gesteuert wird, dessen Auslöseeingang an einen Schaltkreis (46, 48, 51), der einen Teil des Leitungsstroms zugeführt erhält, und an einen Ausgang (34) des Mikroprozessors (12) angeschlossen ist, wobei dieser Ausgang kurz vor der Aussendung einer Ziffer der Dezimalnummer aktiviert wird und kurz nach dem Ende dieser Aussendung inaktiviert wird.

3. Telefonkreis nach einem beliebigen der Ansprüche 1 oder 2, dadurch gekennzeichnet, daß der Speisekreis (19) des Mikroprozessors an den Übertragungskreis über einen Spannungsstabilisationskreis (18) angeschlossen ist, der bei Unterspannung sperrt.

4. Telefonkreis nach einem beliebigen der vorhergehenden Ansprüche, dadurch gekennzeichnet, daß der geregelte Speisekreis (19) einen Pufferkondensator (24) aufweist, der zum übertragungskreis über einen Transistor (33) parallel liegt und dessen Basis mit einem Ausgang des Mikroprozessors verbunden ist, wobei letzterer Ausgang kurz vor der Aussendung einer Ziffer der Dezimalnummer oder einem Wiederholungsöffnen aktiviert ist und kurz nach dieser Aussendung oder dieser Wiederholungsöffnung inaktiviert ist.

5. Telefonkreis nach einem beliebigen der vorhergehenden Ansprüche, dadurch gekennzeichnet, daß der geregelte Speisekreis einen Kondensator (31) enthält, der seine Bezugsspannung speichert.

6. Telefonkreis nach einem beliebigen der vorhergehenden Ansprüche, dadurch gekennzeichnet, daß er einen Nummernwahlüberwachungskreis mit einem Serienschaltkreis aufweist, der sich aus einem Widerstand hohen Werts (83), einem Trennkondensator (94) und einem gesteuerten Schalter (95) zusammensetzt, dessen Steuereingang an einen Hörer-Sperrausgang (88) des Mikroprozessors angeschlossen ist, wobei der Serienkreis einen der Eingäng des Hörerstrom-Verstärkungskreises mit der Klemme (2) gemeinsamen Potentials des Schaltkreises verbindet.

## Claims

1. An integrated-circuit microprocessor-controlled telephone circuit for the two four-wire transmission and for the emergency supply by the line current, this circuit comprising a circuit (16A) by which its insertion voltage can be reduced for a predetermined time duration when the hand set is lifted, characterized in that the integrated circuit for the two wire-four wire transmission (3) is supplied from the rectified line voltage (1, 2) via a line switch (4) which is controlled by a current generator (6) connected in parallel across the transmission circuit, this telephone circuit further comprising a regulated supply circuit (19) for the microprocessor shunted across the transmission circuit and connected to an electrical supply mains (38, 39), and means (35, 14) by which said circuit for the reduction of the insertion voltage can reduce this voltage also during the entire transmission time of each digit of the decimal number.

2. A telephone circuit according to claim 1, characterized in the circuit (16A), by which the insertion voltage can be reduced comprises a series circuit formed from the emitter collector path of a transistor (14) in series with a Zener diode (15), this series circuit being connected in parallel across the transmission circuit and its load impedance (5), said transistor being controlled by a monostable circuit (16) whose trigger input is connected to a circuit (46, 48, 51) receiving a part of the line current, as well as to an output (34) of the microprocessor (12) activated shortly before the transmission of a digit of the decimal number and inactivated shortly after the end of this transmission.

3. A telephone circuit according to any one of claims 1 or 2, characterized in that the supply circuit (19) for the microprocessor is connected to the transmission circuit through a voltage stabilizing circuit (18) with the cut-off in case of undervoltage.

4. A telephone circuit according to any one of the preceding claims, characterized in that the regulated supply circuit (19) comprises a buffer capacitor (24) connected in parallel across the transmission circuit through a transistor (33) whose base is connected to an output of the microprocessor activated shortly before the transmission of a digit of the decimal number or a recall opening, and inactivated shortly after this transmission or this recall opening.

5. A telephone circuit according to any one of the preceding claims, characterized in that the regulated supply circuit comprises a capacitor (31) for storing its reference voltage.

6. A telephone circuit according to any one of the preceding claims, characterized in that it comprises a circuit for monitoring the numbering, comprising a series circuit formed of a high value resistor (93), an insulating capacitor (94) and a control switch (95) whose control input is connected to a hand-set inhibiting output (88) of the microprocessor, this series circuit connecting one of the inputs of the earphone amplifier circuit to the common potential terminal (2) of the circuit.

Fig.1

0 080 396

Fig.2

Fig.3

0 080 396

Fig.4

Fig.5

3